# EUROPÄISCHE PATENTANMELDUNG

(11) **EP 2 366 961 A2**
(43) Veröffentlichungstag der Anmeldung: **21.09.2011**
(21) Anmeldenummer: 11000341.5
(22) Anmeldetag: 18.01.2011
(51) Int. Cl.: F24F 12/00

(54) **Verfahren und Vorrichtung zum Lüften eines Objekts**

(30) Priorität: 08.03.2010 DE 102010010711
(71) Anmelder: Kampmann GmbH, 49811 Lingen (Ems) (DE)
(72) Erfinder: Ensink, Hermann, Dipl.-Ing., 49846 Hoogstede (DE)
(74) Vertreter: Möller, Friedrich

(57) **Zusammenfassung**

Lüftungsanlagen für größere Objekte müssen eine Wärmerückgewinnung ermöglichen. Dazu weist die Lüftungsanlage mindestens einen Wärmetauscher (15) auf. Bekannte Lüftungsanlagen verfügen auch über einen Nebenkanal (16), durch den im Sommer die Zuluft geleitet wird, damit die im Sommer zum Kühlen verwendbare Zuluft von der wärmeren Abluft nicht erwärmt wird. In Stoßzeiten muss die Lüftungsanlage in der Lage sein, für einen kurzen Zeitraum größere Luftmengen umzuwälzen. Das erfordert es, die Lüftungsanlage auf eine solche große Luftmenge auszulegen. Weil eine größere Luftmenge aber nur selten benötigt wird, sind dadurch bekannte Lüftungsanlagen überdimensioniert, was unnötige Kosten verursacht.

Die Erfindung sieht es vor, in Stoßzeiten die umgewälzte Luftmenge dadurch zu erhöhen, dass die Zuluft durch den Wärmetauscher (15) und den Nebenkanal (16) geleitet und vorzugsweise der Ventilator (17) zum Einleiten der Zuluft in das zu lüftende Objekt mit einer größeren Drehzahl betrieben wird und dadurch eine Stoßlüftung mit einer Lüftungsanlage durchführbar ist, die nur ausgelegt ist für geringere Luftdurchsätze für den gewöhnlichen Lüftungsbetrieb.

## Beschreibung

Die Erfindung betrifft ein Verfahren zum Lüften eines Objekts, beispielsweise einer Verkaufsstätte, gemäß dem Oberbegriff des Anspruchs 1. Des Weiteren betrifft die Erfindung eine Vorrichtung zum Lüften eines Objekts gemäß dem Oberbegriff des Anspruchs 4.

Größere Objekte wie gewerblich und kulturell genutzte Gebäude, beispielsweise Verkaufsstätten, Bürokomplexe, Sporthallen oder dergleichen, müssen regelmäßig gelüftet werden. Dazu dienen größere Lüftungsanlagen, die aufgrund gesetzlicher Vorschriften einer Wärmerückgewinnung ermöglichen müssen. Dazu weist die Lüftungsanlage mindestens einen Wärmetauscher auf, von dem die üblicherweise kältere Zuluft mittels der wärmeren Abluft vorgewärmt wird.

Im Sommer kann die als Zuluft verwendete Außenluft dann, wenn die Raumtemperatur höher als die Außentemperatur ist, verwendet werden, um das Innere des zu lüftenden Objekts zu kühlen. Würde dann die Außenluft durch den Wärmetauscher geleitet, hätte das eine Erwärmung der zum Kühlen geeigneten Zuluft durch die wärmere Abluft zur Folge. Deshalb ist es bekannt, die Lüftungsgeräte mit einem Nebenkanal auszustatten, der einen Bypass darstellt, womit der Wärmetauscher im Sommer umgangen werden kann, damit die Außenluft zum Kühlen des Inneren des Objekts genutzt werden kann.

Bei gewerblich oder kulturell genutzten Objekten mit größeren Räumen kann es zu Stoßzeiten kommen, in denen kurzfristig eine Lüftung mit größeren Luftmengen erforderlich ist. Die Lüftungsanlage müsste dann so ausgelegt sein, dass sie diese große Luftmenge umwälzen kann. Es muss dann eine dementsprechend große und teurere Lüftungsanlage installiert werden, obwohl die Lüftungsanlage größere Luftmengen nur kurzfristig umwälzen muss.

Der Erfindung liegt die Aufgabe zugrunde, ein Verfahren und eine Vorrichtung zur Lüftung von Objekten zu schaffen, womit in Stoßzeiten ein größerer Luftmengendurchsatz möglich ist, ohne die Vorrichtung für einen solchen großen Luftmengendurchsatz auslegen zu müssen.

Ein Verfahren zur Lösung dieser Aufgabe weist die Maßnahmen des Anspruchs 1 auf. Demnach wird die Zuluft bei Bedarf sowohl durch den Nebenkanal als auch durch den Wärmetauscher ins Innere des Objekts geleitet. Dadurch sind in Stoßzeiten mit erhöhtem Luftdurchsatz zwei Wege für die Zuluft ins Innere des Objekts frei, und zwar durch den Wärmetauscher und durch den Nebenkanal. Hierdurch kann die kurzfristig höhere Lüftungsleistung herbeigeführt werden, ohne dass die Vorrichtung, nämlich die Lüftungsanlage, zur Erzeugung von Luftdurchsatzspitzen ausgelegt sein muss. Es reicht aus, die Lüftungsanlage für den normalen Lüftungsbetrieb auszulegen und zu bemessen, bei dem die Zuluft entweder durch den Wärmetauscher oder den Nebenkanal geleitet wird.

Bei einer bevorzugten Weiterbildung des Verfahrens ist es vorgesehen, beim Hindurchleiten der Zuluft durch den Nebenkanal und den Wärmetauscher mindestens einen Ventilator zur Erzeugung des Zuluftstroms ins Innere des Objekts so zu betreiben, dass er eine höhere Luftdurchsatzmenge erzeugt. Vorzugsweise wird dazu der mindestens eine Ventilator in Stoßzeiten, bei der eine erhöhte Zuluftmenge erforderlich ist, die durch den Wärmetauscher ohne den Nebenkanal strömt, mit einer höheren Drehzahl betrieben. Dadurch wird der für Stoßzeiten ausreichende Zuluftstrom erzeugt, der möglich ist, weil in solchen Stoßzeiten die Zuluft sowohl durch den Wärmetauscher als auch den Nebenkanal zum Ventilator strömt.

Bei einer vorteilhaften Ausgestaltung des Verfahrens ist es vorgesehen, dass beim Hindurchleiten der Zuluft durch den Nebenkanal und den Wärmetauscher keine Abluft am Wärmetauscher entlanggeleitet wird und/oder ein Ventilator für die Abluft außer Betrieb gesetzt wird. Dadurch wird verhindert, dass im Falle, dass die Außenluft zum Kühlen des Inneren des Objekts geeignet ist, die wärmere Abluft aus dem Inneren des Objekts die zum Kühlen eingesetzte Zuluft nicht aufwärmt. Dieses kann durch ein Absperrmittel für die Abluft vor oder hinter dem Abluftkanal des Wärmetauschers erreicht werden, aber alternativ oder zusätzlich auch durch ein Abschalten des Ventilators für die Abluft.

Eine Vorrichtung zur Lösung der eingangs genannten Aufgabe weist die Merkmale des Anspruchs 4 auf. Bei dieser Vorrichtung (Lüftungsanlage) ist das mindestens eine Luftleitorgan oder Absperrorgan so ausgebildet, dass die Zuluft bei Bedarf durch sowohl den Wärmetauscher als auch den Nebenkanal strömen kann. Das Luftleitorgan oder Absperrorgan ermöglicht es, in Spitzenzeiten eine größte Zuluftmenge in das Innere des Objekts zu leiten, wobei durch die zu diesem Zweck erfolgende Nutzung sowohl des Wärmetauschers als auch des Nebenkanals die Zuluftmenge der Vorrichtung größer ist als die Nennzuluftmenge, wofür die Vorrichtung (Lüftungsanlage) ausgelegt und bemessen ist. Um in Spitzenzeiten kurzfristig größere Zuluftmengen ins Innere des Objekts leiten zu können, braucht die Lüftungsanlage nicht so ausgelegt zu werden, dass ihre Nennzuluftmenge der nur in Spitzenzeiten benötigten Spitzen-Zuluftmenge entspricht.

Bevorzugt ist es vorgesehen, das Luftleitorgan als mindestens eine auch als Absperrorgan wirkende Luftleitklappe auszubilden. Mit dieser kann die Zuluftströmung den Erfordernissen entsprechend gesteuert und umgeleitet werden.

Bei einer Ausgestaltung der Erfindung ist es vorgesehen, dass die mindestens eine Luftklappe wahlweise in zwei Stellungen bringbar ist, und zwar eine Stellung, in der die Zuluft nur durch den Wärmetauscher strömt, und eine andere Stellung, in der die Zuluft sowohl durch den Wärmetauscher als auch den Nebenkanal strömt. Damit kann in Spitzenzeiten eine solche Zuluftmenge ins Innere des Objekts geleitet werden, die die Nennzuluftmenge der Vorrichtung übersteigt. Durch die Drehzahl des Zuluftlüfters ist dann vorherbestimmbar, wie groß der Anteil der Zuluft ist, die einerseits über den Wärmetauscher und andererseits über den Nebenkanals ins Innere des Objekts gelangt. Bei einer normalen Drehzahl des Zuluftventilators, insbesondere bei einer Nenndrehzahl desselben, gelangt aufgrund des größeren Strömungswiderstands, den der Wärmetauscher der Zuluft entgegensetzt, ein Großteil der Zuluft über den Nebenkanal ins Innere des Objekts. Wenn in Spitzenzeiten kurzfristig eine über der Nennzuluftmenge liegende Spitzen-Zuluftmenge ins Innere des Objekts zu leiten ist, wird durch Erhöhung der Drehzahl des Zuluftventilators der Anteil der ins Innere des zu belüftenden Objekts gelangenden Zuluft vergrößert.

Eine weitere Ausgestaltung der Erfindung sieht es vor, dass die mindestens eine Luftklappe wahlweise in drei Stellungen bringbar ist. In einer Stellung gelangt die Zuluft nur durch den Wärmetauscher ins Innere des Objekts. In einer anderen Stellung der Luftleitklappe gelangt die Zuluft nur durch den Nebenkanal in das Objekt. In der dritten Stellung der Lufleitklappe gelangt die Zuluft sowohl durch den Wärmetauscher als auch den Nebenkanal in das Objekt. Im ersten Fall findet der normale Betrieb der Vorrichtung wie bei bekannten Lüftungsanlagen statt, indem die Zuluft durch den Wärmetauscher ins Innere des Objekts geleitet wird, wobei eine Vorwärmung der Zuluft durch die wärmere Abluft im Wärmetauscher erfolgt. Im Sommer-Fall, wenn zur Vermeidung einer Vorwärmung der zum Kühlen geeigneten Zuluft der Wärmetauscher umgangen werden soll, strömt die Zuluft durch den als Bypass dienenden Nebenkanal. Nur wenn in Stoßzeiten eine überdurchschnittlich große Zuluftmenge ins Innere des Objekts geleitet werden soll, wird in der dritten Stellung des Luftleitorgans die Zuluft sowohl durch den Nebenkanal als auch durch den Wärmetauscher geleitet. Hierbei werden also beide Zuluftwege genutzt, um große Luftmengen in Stoßzeiten ins Innere des Objekts einströmen zu lassen.

Die mindestens eine Luftleitklappe ist bevorzugt mit einem insbesondere motorischen Antrieb versehen, wodurch sie von einer entsprechenden Steuerung in die vorgesehene Stellung bringbar ist und somit automatisch die erfindungsgemäße Vorrichtung (Lüftungsanlage) in die jeweils gewünschte Betriebsstellung betreibbar ist.

Denkbar ist es, die Vorrichtung mit einem Zuluftventilator zu versehen, der einen größeren Zuluftstrom erzeugen kann als ein Zuluftventilator zur Erzeugung der Nennzuluftmenge, wofür die Vorrichtung konzipiert ist. Ein solcher Zuluftventilator braucht zur Erzeugung einer Spitzen-Zuluftmenge nur mit seiner Nenndrehzahl betrieben zu werden. Dadurch werden erhöhte Ventilatorgeräusche vermieden. Im Normalbetrieb der Lüftungsanlage, wenn die Zuluft nur durch den Wärmetauscher oder den Nebenkanal strömt, kann ein solcher Zuluftventilator mit einer unterhalb seiner Nenndrehzahl liegenden Drehzahl besonders energiesparend und geräuscharm betrieben werden.

Bevorzugte Ausführungsbeispiele der Erfindung werden nachfolgend anhand der Zeichnung näher erläutert. In dieser zeigen:
- Fig. 1: eine schematische Grundrissdarstellung der Vorrichtung,
- Fig. 2: ein zweites Ausführungsbeispiel der Vorrichtung in einer Grundrissdarstellung analog zur Fig. 1,

- Fig. 3: eine dreidimensionale Prinzipdarstellung der Vorrichtung gemäß der Fig. 1, und
- Fig. 4: eine dreidimensionale Prinzipdarstellung einer anderen Ausgestaltung der Vorrichtung der Fig. 3.

Die gezeigten Ausführungsbeispiele der Erfindung betreffen Vorrichtungen zum Lüften von Objekten, die nachfolgend als "Lüftungsanlagen" bezeichnet werden. Üblicherweise werden solche Lüftungsanlagen zum Lüften der Innenräume größerer Objekte eingesetzt. Dabei kann es sich um Verkaufsstätten, größere Büros, Versammlungs- und Konferenzräume oder auch Sporthallen handeln. Diese Gebäude müssen intensiv gelüftet werden, was entsprechend große Lüftungsanlagen mit einem Luftdurchsatz von mehreren 1.000 m³/h, vorzugsweise mehr als 4.000 m³/h, erforderlich macht.

Die Vorrichtung verfügt über ein in einigen Figuren gezeigtes quaderförmiges Gehäuse 10. Das Gehäuse 10 muss nicht zwingend quaderförmig sein, es kann auch andere Gestaltungen aufweisen. Das Gehäuse 10 ist mit Anschlüssen zum Zulufteintritt 11, Zuluftaustritt 12, Ablufteintritt 13 und einem Abluftaustritt 14 versehen. Durch den Zulufteintritt 11 strömt Frischluft, und zwar bevorzugt Außenluft, mit Außentemperatur ein. Die Zuluft verlässt das Gehäuse 10 durch den Zuluftaustritt 12, die ins Innere des zu lüftenden Objekts, insbesondere einen Raum, strömt. Erwärmte Abluft aus dem Objekt bzw. Raum strömt durch den Ablufteintritt 13 in das Gehäuse 10. Die Abluft verlässt das Gehäuse 10 durch den Abluftaustritt 14, der vorzugsweise ins Freie führt.

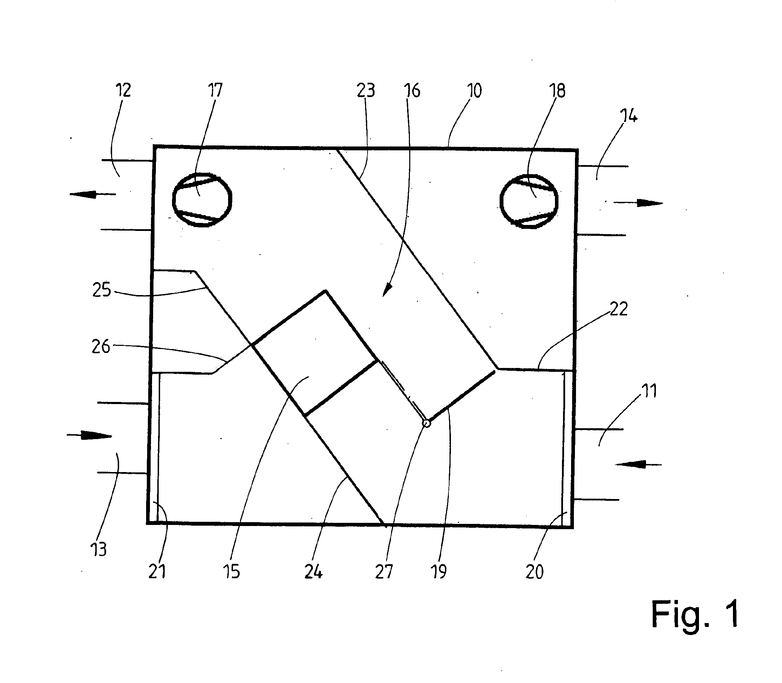

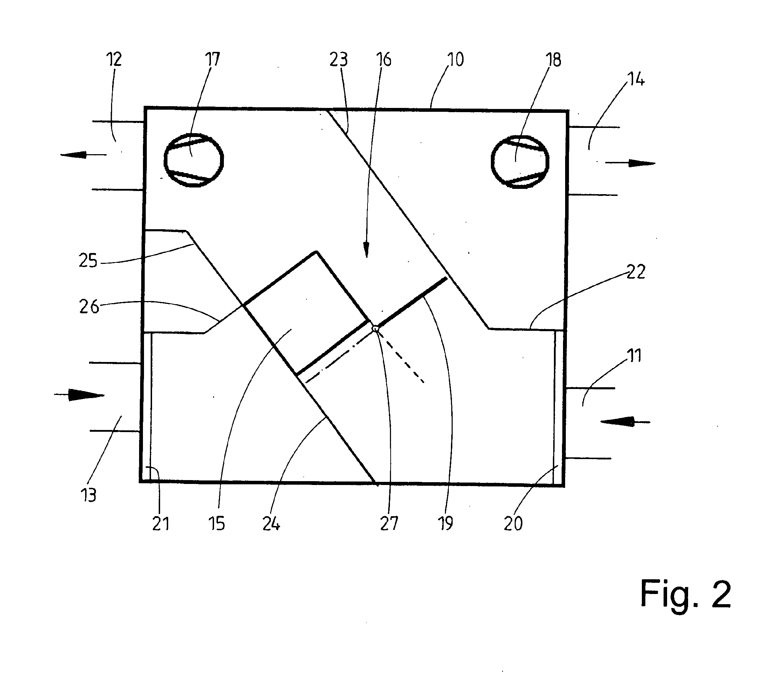

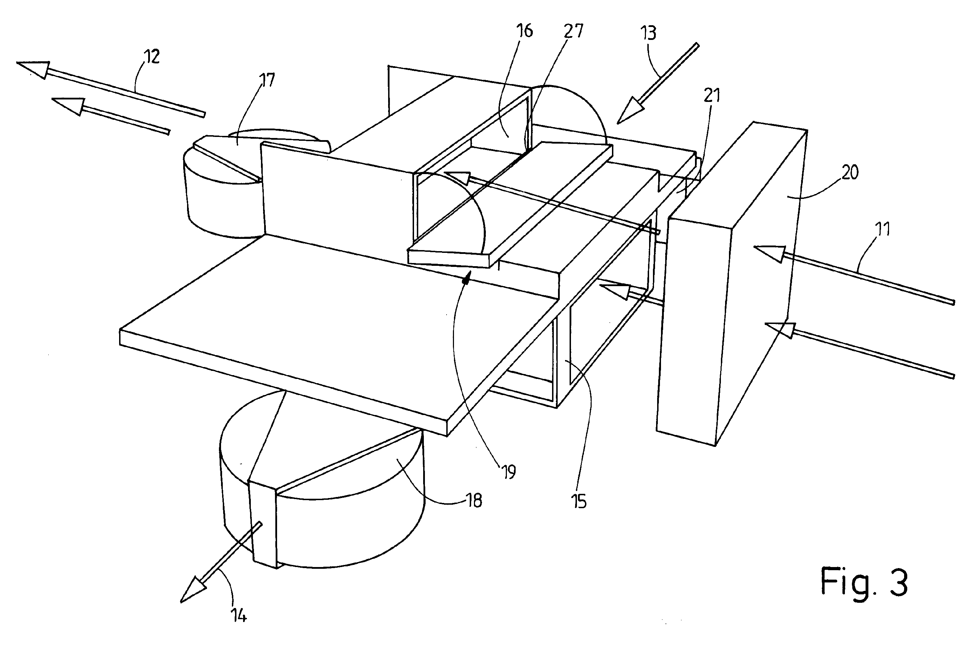

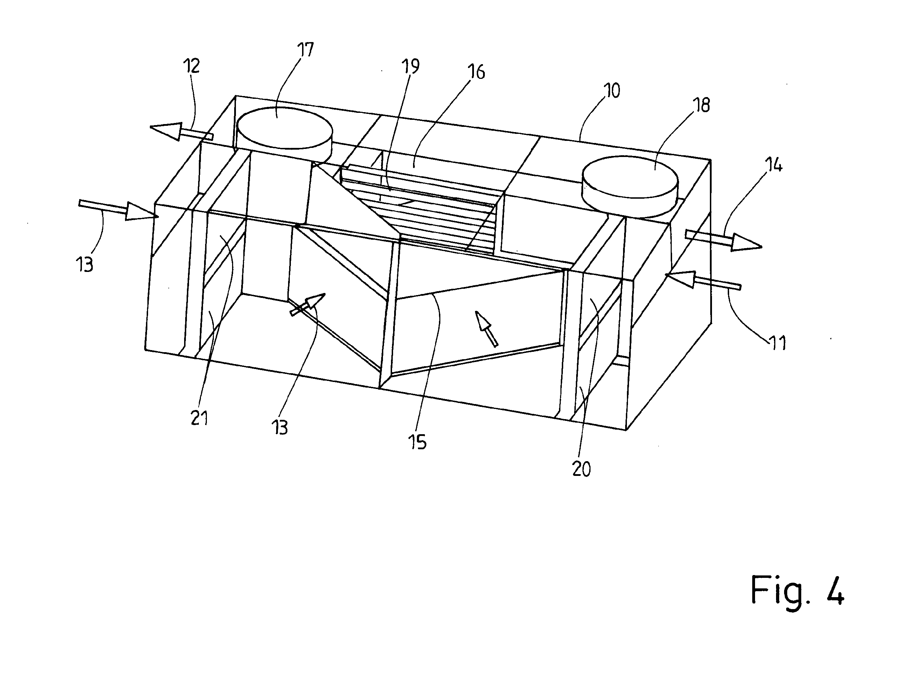

Im Gehäuse 10 befindet sich im gezeigten Ausführungsbeispiel ein einziger Wärmetauscher 15. Es können aber auch mehrere Wärmetauscher 15 im Gehäuse 10 vorgesehen sein. Neben dem Wärmetauscher 15 befindet sich im Gehäuse 10 ein Nebenkanal 16, durch den Zuluft am Wärmetauscher 15 bei Bedarf vorbeileitbar ist. Der Nebenkanal 16 grenzt seitlich am Wärmetauscher 15 an. Jedoch kann der Nebenkanal 16 auch vom Wärmetauscher 15 beabstandet sein. Weiterhin befinden sich im Gehäuse 10 zwei Ventilatoren, und zwar ein Zuluftventilator 17 und ein Abluftventilator 18. Außerdem ist im Gehäuse 10 ein Luftleitorgan angeordnet, das im gezeigten Ausführungsbeispiel als eine Luftleitklappe 19 mit einer Absperrfunktion ausgebildet ist. Im Inneren des Gehäuses 10 befinden sich schließlich noch Filter, und zwar ist ein Filter 20 dem Zulufteintritt 11 zugeordnet. Ein weiterer Filter 21 ist dem Ablufteintritt 13 zugeordnet. Im Gehäuse 10 sind auch noch Trennwände 22 bis 26 vorgesehen, die Strömungskanäle zum gezielten Hindurchleiten der Zuluft und der Abluft durch das Gehäuse 10 der Vorrichtung bilden. Die Kanäle für die Zuluft und die Abluft im Gehäuse 10 befinden sich in unterschiedlichen, übereinanderliegenden Ebenen. In den Fig. 1 und 2 ist eine obere Ebene dargestellt, woraus die Zuluftführung in der Vorrichtung ersichtlich ist. Die unteren Ebenen für die Abluftführung zeigen die Fig. 3 und 4. Infolge der in unterschiedlichen Ebenen die Vorrichtung durchströmenden Zuluft und Abluft wird der Wärmetauscher 15 im Kreuzstrom durchströmt. Es sind aber auch Vorrichtungen denkbar, bei denen der Wärmetauscher 15 im Gegenstrom durchströmt wird.

Es ist denkbar, einen zusätzlichen, nicht gezeigten Filter dem Nebenkanal 16 zuzuordnen. Dann wird der Filter für die Zuluft aufgeteilt in den Filter 20 und den nicht gezeigten zusätzlichen Filter im Nebenkanal 16. Letzterer verfügt über eine höhere Standzeit, weil er nur aktiv ist, wenn Zuluft durch den Nebenkanal 16 strömt.

In den Ausführungsbeispielen der Fig. 1, 3 und 4 ist die Luftleitklappe 19 so ausgebildet, dass sie wahlweise den Nebenkanal 16 verschließt (Fig. 1) oder den Nebenkanal 16 freigibt (Fig. 3 und 4).

Beim Ausführungsbeispiel der Fig. 2 sind drei verschiedene Stellungen der Luftleitklappe 19 vorgesehen. In der gezeigten Stellung (Fig. 2) verschließt die Luftleitklappe 19 den Nebenkanal 16, so dass die Zuluft nur durch den Wärmetauscher 15 ins Innere des zu lüftenden Objekts gelangen kann. In der zweiten Stellung (strich-punktiert in der Fig. 2) verschließt die Luftleitklappe den Zuluftkanal zum Wärmetauscher 15, während der Nebenkanal 16 geöffnet ist. In der dritten Position, die in der Fig. 2 gestrichelt dargestellt ist, gibt die Luftleitklappe 19 sowohl den Nebenkanal 16 als auch den Zuluftkanal des Wärmetauschers 15 frei.

Die Verstellung der Luftkleitklappe 19 kann bei allen Ausführungsbeispielen der Erfindung automatisch, insbesondere motorisch, erfolgen. Dann kann die Steuerung der Lüftungsanlage die Luftleitklappe 19 in die für die jeweilige Betriebsart erforderliche Stellung bringen durch entsprechendes Ansteuern des Elektromotors zum Verschwenken der Luftleitklappe 19.

Das erfindungsgemäße Verfahren wird nachfolgend unter Bezugnahme auf die Fig. 1 und 2 näher erläutert:
Die Zu- und Abluft durchströmt das Gehäuse 10 der Vorrichtung größtenteils in unterschiedlichen Ebenen. Auf diese Weise kann sowohl die Zuluft als auch die Abluft in den Wärmetauscher 15 strömen, und zwar entweder im Kreuzstrom oder im Gegenstrom.

In einer gewöhnlichen Betriebsphase der Lüftungsanlage strömt die Zuluft nur durch den Wärmetauscher 15. Die Luftleitklappe 19 befindet sich dann in der den Nebenkanal 16 verschließenden Stellung der Fig. 1 und 2. Außerdem wird der Wärmetauscher 15 von der Abluft durchströmt. Diese in den überwiegenden Fällen anzutreffende Betriebsweise der Lüftungsanlage kommt zum Einsatz, wenn als Zuluft von außen angesaugte Frischluft dient, die relativ kalt ist. Diese kalte Zuluft wird dann von der deutlich wärmeren Abluft aus dem Inneren des Gebäudes oder Raums vorgewärmt, so dass der Abluft ein Teil der Energie entzogen wird, bevor diese durch den Abluftaustritt 14 ins Freie geleitet wird. Hierdurch findet beim Lüften des Gebäudes bzw. Objekts eine Wärmerückgewinnung statt.

In einer zweiten Betriebsstellung ist die Luftleitklappe 19 so verschwenkt, dass die Zuluft sowohl durch den Nebenkanal 16 als auch den Wärmetauscher 15 strömen kann, wo durch den Zuluftaustritt 12 Zuluft ins Innere des Objekts gelangt, die den Nebenkanal 16 und den Wärmetauscher 15 durchströmt hat. Die Luftleitklappe 19 befindet sich dann in der in der Figur punkt-strich-liniert gezeigten Stellung (Fig. 1), die die Zuluftzufuhr zum Wärmetauscher 15 und zum Nebenkanal 16 freigibt. Diese Betriebsweise wird üblicherweise im Sommer verwendet, wenn die als Zuluft dienende Außenluft relativ warm ist, aber immer noch kühler als die Raumtemperatur im Inneren des zu lüftenden Gebäudes. Dann wird die kühlere Außenluft zum Kühlen des Gebäudeinneren verwendet. Da aber die wärmere Raumluft als Abluft durch den Wärmetauscher 15 geleitet wird, würde die wärmere Raumluft die zum Kühlen geeignete, etwas kühlere Außenluft vorwärmen. Die die Außentemperatur aufweisende Zuluft wäre dann nicht mehr zum Kühlen des Rauminneren geeignet. Weil aber die Zuluft auch durch den Nebenkanal 16 ins Innere des Gebäudes geleitet wird, wird die den Nebenkanal 16 durchströmende Zuluft am Wärmetauscher 15 vorbeigeführt und von der wärmeren Abluft nicht vorgewärmt. Da der Strömungswiderstand im Wärmetauscher 15 größer ist als im barrierefreien Nebenkanal 16, wird ein Großteil der Zuluft durch den Nebenkanal 16 ins Innere des Gebäudes strömen. Nur ein geringer Teil der Zuluft gelangt über den Wärmetauscher 15 ins Innere des Gebäudes, wobei allerdings dieser geringere Teil der den Wärmetauscher 15 passierenden Zuluft von der wärmeren Abluft etwas vorgewärmt wird. Bei dieser Betriebsweise läuft der Zuluftventiator 17 mit seiner normalen Drehzahl, insbesondere der Nenndrehzahl.

Beim Ausführungsbeispiel der Fig. 2 ist es denkbar, die zuvor beschriebene zweite Betriebsweise der Lüftungsanlage dahingehend abzuwandeln, dass die Luftleitklappe 19 den Durchtritt der Zuluft durch den Wärmetauscher 15 verschließt (punkt-strich-linierte Darstellung in der Fig. 2). Dann kann die Zuluft nur durch den Nebenkanal 16 ins Innere des zu lüftenden Objekts gelangen. Dabei wird der Wärmetauscher 15 von der Zuluft vollständig umgangen, so dass die Zuluft von der den Wärmetauscher 15 ständig passierenden Abluft nicht vorgewärmt wird.

Die Lüftungsanlage ist so bemessen und ausgelegt, dass ihr Luftdurchsatz, insbesondere ihr Nenn- und Luftdurchsatz, dem für die gewöhnliche (erste) und zweite Betriebsphase erforderlichen Luftdurchsatz entspricht.

Eine dritte Betriebsweise der Lüftungsanlage ist für Stoßzeiten vorgesehen, wenn kurzfristig eine erhöhte Luftmenge zum Lüften benötigt wird. Für solche größeren Luftmengen ist die Lüftungsanlage nicht ausgelegt. Die Erfindung sieht für diesen nur gelegentlich und kurzfristig eintretenden Fall eine Stoßlüftungsfunktion vor, die es ermöglicht, die auf einen geringeren Luftdurchsatz ausgelegte Lüftungsanlage kurzzeitig, nämlich für nur einen kurzen Zeitraum, mit einer größeren Luftmenge zu durchströmen, obwohl die Lüftungsanlage hierfür nicht ausgelegt ist.

Bei dieser dritten Betriebsweise wird in Stoßzeiten, wenn kurzfristig höhere Luftmengen zum Lüften des Inneren des Objekts erforderlich sind, die Zuluft sowohl über den Wärmetauscher 15 als auch den Nebenkanal 16 geleitet. Dazu befindet sich beim Ausführungsbeispiel der Fig. 1 die Luftleitklappe 17 in der punkt-strich-linierten Stellung. In dieser kann die Zuluft sowohl durch den Wärmetauscher 15 als auch den Nebenkanal 16 hindurchströmen und durch den Zuluftaustrift 12 in das Innere des zu lüftenden Raums gelangen. Beim Ausführungsbeispiel der Fig. 2 nimmt die Luftleitklappe 19 die gestrichelte Stellung ein, in der sie während der Stoßlüftungsphase ebenfalls sowohl den Wärmetauscher 15 als auch den Nebenkanal 16 freigibt.

In der Stoßlüftungsphase wird der Zuluftventilator 17 so betrieben, dass er mehr Zuluft ins Innere des zu lüftenden Objekts fördert als es in den beiden zuerst betriebenen hauptsächlich anzutreffenden Betriebsarten der Lüftungsanlage der Fall ist. Üblicherweise wird der Zuluftventilator 17 in der Stoßlüftungsphase mit einer höheren Drehzahl betrieben, so dass er in dieser Betriebsphase eine größere Luftmenge in das Innere des zu lüftenden Raums fördert. Alternativ kann es zu diesem Zweck vorgesehen sein, nur den Zuluftventilator 14 so zu bemessen, dass er einen größeren Nenn-Luftdurchsatz zulässt. Im Übrigen braucht die Lüftungseinrichtung aber nicht so groß bemessen zu sein, dass sie über einen Nenn-Luftdurchsatz verfügt, der zur Stoßlüftung erforderlich ist. Wird ein leistungsfähiger Zuluftventilator 17 verwendet, kann dieser zum Stoßlüften mit seiner Nenndrehzahl betrieben werden, wodurch keine höheren Lüftergeräusche entstehen. In den übrigen Betriebsphasen der Lüftungsanlage kann der im Verhältnis zur Lüftungsanlage im Übrigen größer dimensionierte Zuluftventilator 17 dann mit verringerter Nenndrehzahl betrieben werden. Auch das führt zur Verringerung der Lüftergeräusche.

Abweichend von dem gezeigten Ausführungsbeispiel kann im Nebenkanal 16 noch ein weiterer Zuluftfilter vorgesehen sein. Dieser Zuluftfilter entlastet den dem Zulufteintritt 11 zugeordneten Filter 20. Außerdem kann der zusätzliche Filter im Nebenkanal 16 sicherstellen, dass im Stoßlüftungsfall eine ausreichende Filterung der die Nennluftmenge der Lüftungseinrichtung im Stoßlüftungsfall übersteigenden größeren Luftmenge erfolgt.

### Bezugszeichenliste:

- 10: Gehäuse
- 11: Zulufteintritt
- 12: Zuluftaustritt
- 13: Ablufteintritt
- 14: Abluftaustritt
- 15: Wärmetauscher
- 16: Nebenkanal
- 17: Zuluftventilator
- 18: Abluftventilator
- 19: Luftleitklappe
- 20: Filter
- 21: Filter
- 22: Trennwand
- 23: Trennwand
- 24: Trennwand
- 25: Trennwand
- 26: Trennwand
- 27: Schwenkachse

## Patentansprüche

1. Verfahren zum Lüften eines Objekts, beispielsweise einer Verkaufsstätte, wobei entweder Zuluft für das Objekt und Abluft aus dem Objekt zum Vorwärmen der Zuluft durch einen Wärmetauscher (15) geleitet oder mindestens ein Teil der Zuluft durch einen Nebenkanal (16) direkt in das Objekt geleitet wird, **dadurch gekennzeichnet, dass** bei Bedarf die Zuluft durch den Nebenkanal (16) und den Wärmetauscher (15) in das Innere des Objekts geleitet wird.

2. Verfahren nach Anspruch 1, **dadurch gekennzeichnet, dass** beim Hindurchleiten der Zuluft durch den Nebenkanal (16) und den Wärmetauscher (15) mindestens ein Ventilator (17) für die Zuluft zur Erzeugung eines größeren Luftdurchsatzes mit vorzugsweise einer höheren Drehzahl betrieben wird.

3. Verfahren nach Anspruch 1 oder 2, **dadurch gekennzeichnet, dass** beim Hindurchleiten der Zuluft durch den Nebenkanal (16) und den Wärmetauscher (15) keine Abluft am Wärmetauscher (15) entlangbewegt wird und/oder ein Ventilator (18) für die Abluft außer Betrieb gesetzt wird.

4. Vorrichtung zum Lüften eines Objekts, beispielsweise eine Verkaufsstätte, mit einem Wärmetauscher (15), durch den Zuluft und Abluft hindurchleitbar sind und einen Nebenkanal (16), dem ein Luftleit- und/oder Absperrorgan zugeordnet ist, wobei durch den Nebenkanal (16) bei Bedarf mindestens ein Teil der Zuluft hindurchleitbar ist, **dadurch gekennzeichnet, dass** das Luftleit- und/oder Absperrorgan zum Hindurchleiten der Zuluft durch nur den Wärmetauscher (15) und zum bedarfsweisen Hindurchleiten der Zuluft durch den Wärmetauscher (15) und den Nebenkanal (16) ausgebildet ist.

5. Vorrichtung nach Anspruch 4, **dadurch gekennzeichnet, dass** das Luftleit- und/ oder Absperrorgan als mindestens eine Luftleitklappe (19) ausgebildet ist.

6. Vorrichtung nach Anspruch 4 oder 5, **dadurch gekennzeichnet, dass** die mindestens ein Luftleitklappe (19) wahlweise in zwei Stellungen bringbar ist, und zwar eine Stellung, in der die Zuluft durch den Wärmetauscher (15) strömt und eine andere Stellung, in der die Zuluft durch den Nebenkanal (16) und den Wärmetauscher (15) strömt.

7. Vorrichtung nach Anspruch 4 oder 5, **dadurch gekennzeichnet, dass** die mindestens eine Luftleitklappe (19) wahlweise in drei Stellungen bringbar ist, und zwar eine Stellung, in der die Zuluft nur durch den Wärmetauscher (15) strömt, eine Stellung, in der die Zuluft nur durch den Nebenkanal (16) strömt und eine Stellung, in der die Zuluft sowohl durch den Wärmetauscher (15) als auch den Nebenkanal (16) strömt.

8. Vorrichtung nach einem der Ansprüche 4 bis 7, **dadurch gekennzeichnet, dass** die mindestens eine Luftleitklappe (19) motorisch in die jeweilige Stellung bringbar ist.
